# EUROPEAN PATENT APPLICATION

(11) **EP 4 571 185 A2**
(43) Date of publication of application: **18.06.2025**
(21) Application number: 24202047.7
(22) Date of filing: 23.09.2024
(51) Int. Cl.: F23C 1/00, F23C 9/08, F23D 14/22, F23J 13/08, F23L 7/00

(54) **COMBUSTION SYSTEM USING OXYGEN AND HYDROGEN**

(30) Priority: 22.09.2023 US 202363539847 P
(71) Applicant: Great Southern Flameless, LLC, Broken Arrow, OK 74012 (US)
(72) Inventor: GIBSON, William C., Broken Arrow, 74012 (US); CRAIG, Andrew L., Broken Arrow, 74012 (US)
(74) Representative: Boult Wade Tennant LLP

(57) **Abstract**

A combustion system includes a combustion chamber for generating energy. The system includes a first inlet for supplying an oxidant into the chamber and a second inlet for supplying a fuel into the chamber. The system also includes a third inlet in fluid communication with the first inlet for supplying oxygen into the chamber. The system further includes a fourth inlet for supplying hydrogen into the chamber. A circulation line is used to deliver a flue gas from the chamber to the first inlet.

## Description

### BACKGROUND

### Field

Embodiments of the present disclosure generally relate to a combustion system. More particularly, embodiments of the present disclosure generally relate to a combustion system for combusting oxygen and hydrogen.

### Description of the Related Art

Flame combustion of fuel is commonly used to produce energy. The fuel reactions typically occur on the relatively small flame surface. Flame combustion of fuel causes the emission of various pollutants such as NOx, CO, etc. These pollutants may adversely affect the environment and human health.

Flameless combustion has been developed to reduce the emission of these pollutants while retaining thermal efficiencies in combustion systems. However, flameless combustion of hydrocarbon fuels still produces some amounts of these pollutants.

There is a need, therefore, for a combustion system that can produce energy while minimizing the production of harmful pollutants. There is also a need for a combustion system that can produce energy using hydrogen and oxygen.

### SUMMARY

In one embodiment, a method of operating a combustion system having a chamber is provided. The method includes supplying a flue gas via a first gas line into the chamber. Oxygen is supplied into the first gas line at a location upstream from the chamber and enters the chamber along with the flue gas. Hydrogen is supplied into the chamber via a plurality of second inlets. The temperature of the chamber at the point of mixing is above the auto-ignition temperature of oxygen and hydrogen.

In one embodiment, a combustion system includes a combustion chamber for generating energy. The system includes a first inlet for supplying an oxidant into the chamber and a second inlet for supplying a fuel into the chamber. The system also includes a third inlet in fluid communication with the first inlet for supplying oxygen into the chamber. The system further includes a fourth inlet for supplying hydrogen into the chamber. A circulation line is used to deliver a flue gas from the chamber to the first inlet.

In one embodiment, a method of operating a combustion system having a chamber is provided. The method includes supplying air via a first inlet into the chamber and supplying a carbon containing fuel via a second inlet for combustion with the air. Oxygen is supplied via a third inlet while reducing the supply of air. Also, a flue gas is circulated into the chamber while reducing the supply of air. The method also includes transitioning supplying the carbon containing fuel from the second inlet to a plurality of fourth inlets. Then, hydrogen is supplied via a plurality of fifth inlets while reducing flow of the carbon containing fuel from the plurality of fourth inlets.

In another embodiment, a method of operating a combustion system having a chamber is provided. The method includes supplying a flue gas via a first gas line into the chamber and supplying oxygen into the first gas line at a location upstream from the chamber. A carbon containing fuel is supplied via a first inlet of a second gas line for combustion with the oxygen. The method also includes supplying the carbon containing fuel via a plurality of second inlets of the second gas line and stopping flow through the first inlet. Hydrogen is supplied via a plurality of third inlets while reducing flow of the carbon containing fuel from the plurality of second inlets.

In another embodiment, a method operating a combustion system having a chamber is provided. The method includes supplying a flue gas via a first gas line into the chamber and supplying oxygen into the first gas line at a location upstream from the chamber. The oxygen enters the chamber along with the flue gas. The method also includes supplying hydrogen via a plurality of second inlets into the chamber, wherein a location in the chamber where the oxygen and the hydrogen mix has a temperature above the auto-ignition temperature of oxygen and hydrogen.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, may admit to other equally effective embodiments.
Figure 1 is a side elevation view of an exemplary combustion system for the combustion of one or more gases, according to some embodiments.
Figure 2 is a top sectional view of the housing of the combustion system of Figure 1.
Figure 3 shows various gas lines for supplying one or more gases into the chamber of the combustion system of Figure 1.
Figure 4 is a partial view of the first gas line and the inlets of the combustion system of Figure 1.
Figure 5 is an enlarged view of one of the inlets connected to the first gas line of the combustion system of Figure 1.
Figure 6 is a schematic view of the chamber and the gas lines of the combustion system of Figure 1.

To facilitate understanding, identical reference numerals have been used, where possible, to designate identical elements that are common to the figures. It is contemplated that elements and features of one embodiment may be beneficially incorporated in other embodiments without further recitation.

### DETAILED DESCRIPTION

The present disclosure generally provides apparatus and methods of combusting oxygen and hydrogen. In one embodiment, oxygen and hydrogen are mixed with flue gas and combusted to generate energy. The mixture advantageously allows the flameless combustion of oxygen and hydrogen to occur at a lower temperature.

In one embodiment, a method of operating a combustion system having a chamber is provided. The method includes supplying a flue gas via a first gas line into the chamber and supplying oxygen into the first gas line at a location upstream from the chamber. A carbon containing fuel is supplied via a first inlet of a second gas line for combustion with the oxygen. The method also includes supplying the carbon containing fuel via a plurality of second inlets of the second gas line and stopping flow through the first inlet. Hydrogen is supplied via a plurality of third inlets while closing flow of the carbon containing fuel from the plurality of second inlets.

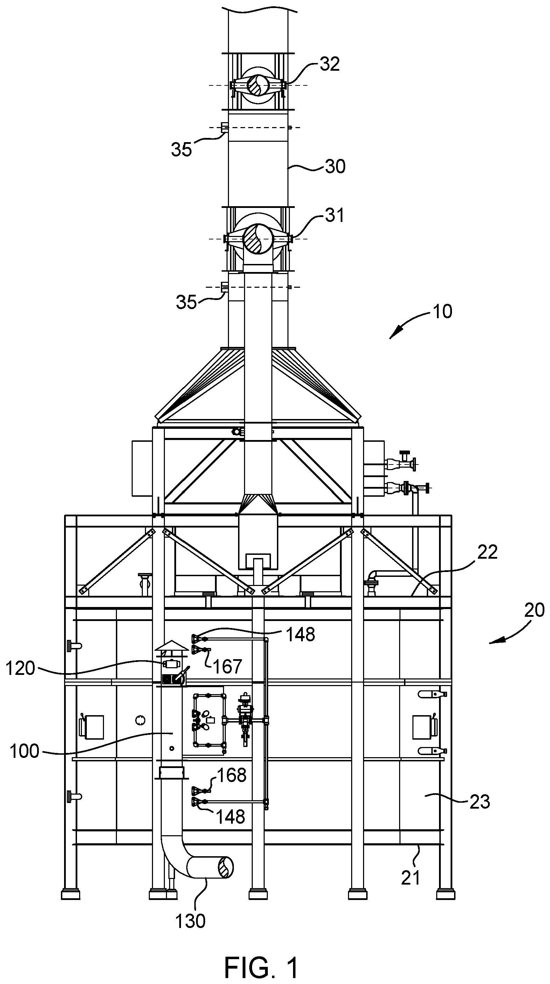

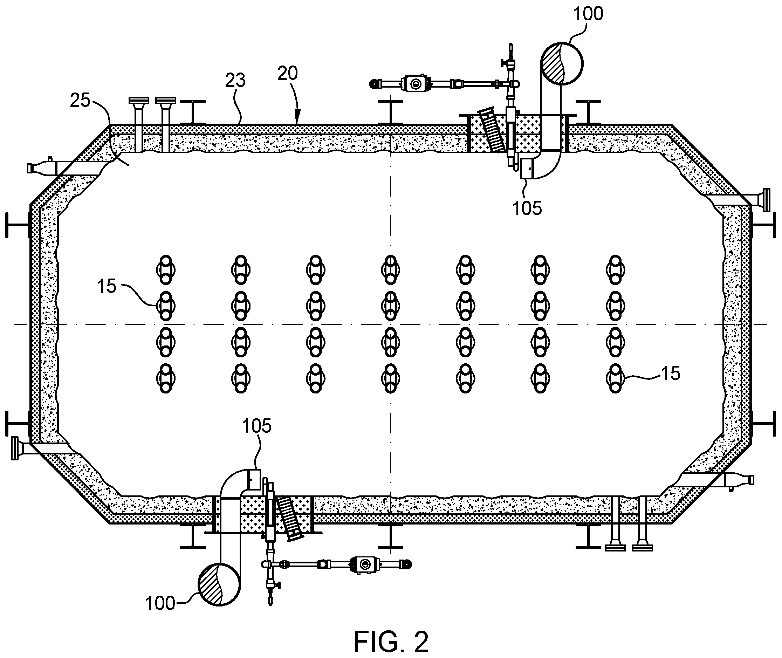

Figure 1 is an elevation view of the exterior of an exemplary combustion system 10 for the combustion of one or more gases, according to some embodiments. The combustion system 10 includes a combustion housing 20 and a stack 30. The combustion system 10 may function as a heater and may be referred to herein as such. The combustion housing 20 includes a chamber 25 where combustion of the one or more gases *(e.g.,* oxygen and hydrogen) takes place, as shown in Figure 2. Figure 2 is a top, sectional view of the housing 20. The housing 20 includes a floor 21, a ceiling 22, and a plurality of sidewalls 23 connected to the floor 21 and the ceiling 22. The chamber 25 is defined by the floor 21, the ceiling 22, and the plurality of sidewalls 23. The chamber 25 may be configured for flame combustion, flameless combustion, or both. At least some of the flue gas from the combustion are vented from the chamber 25 to the atmosphere through the stack 30. The stack 30 may include a plurality of gas ducts, such as a hot fuel gas duct 31 and a cold fuel gas duct 32. One or more stack dampers 35 are connected to the stack 30 to control the flow of gases through the stack 30. The combustion system 10 may be used to heat a plurality of heating tubes inside the chamber 25. In this example, the heating tubes are in the form of a plurality of heating coils 15.

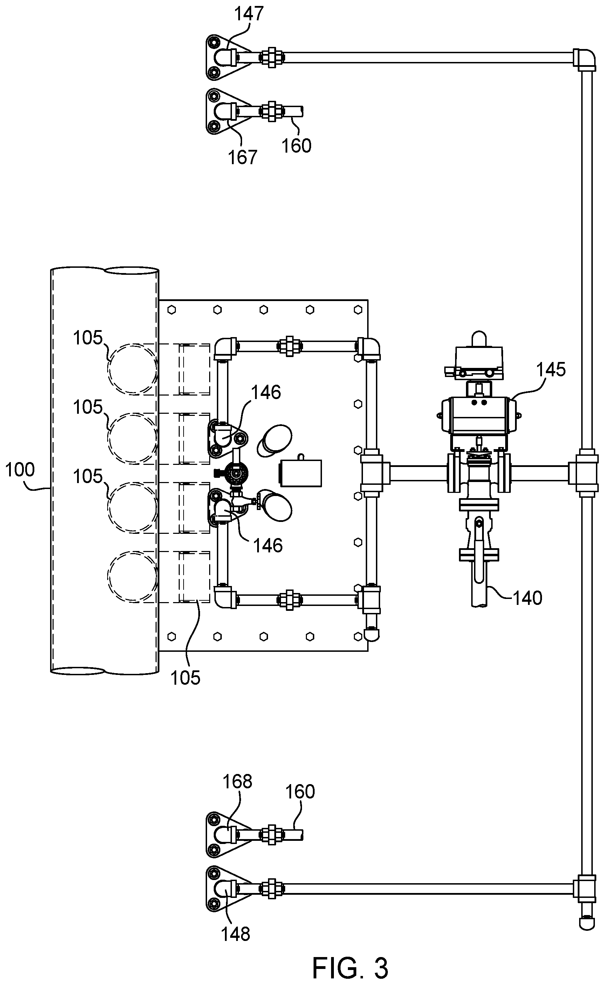

The combustion system 10 includes a network of gas lines for supplying the one or more gases into the chamber 25 for combustion. In this example, the one or more gases are supplied into the chamber 25 at two locations, *i.e.,* at the two opposing longer sidewalls 23 of the chamber 25 as shown in Figure 2. It is contemplated the one or more gases may be supplied at a single location, three locations, four or more locations in the chamber 25. For sake of clarity, the description herein will be limited to the introduction of the gases into a single location of the chamber 25. Figure 3 shows various gas lines for supplying one or more gases into one location of the chamber 25.

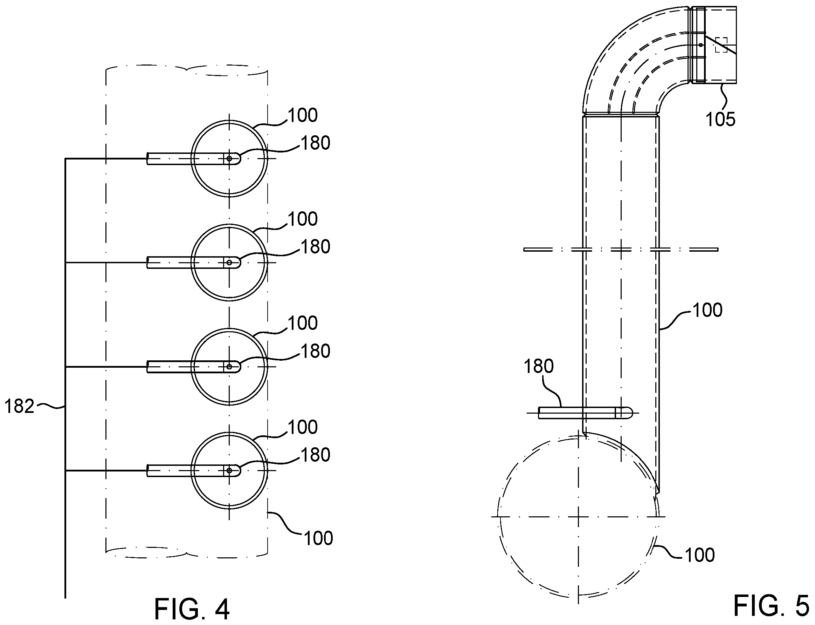

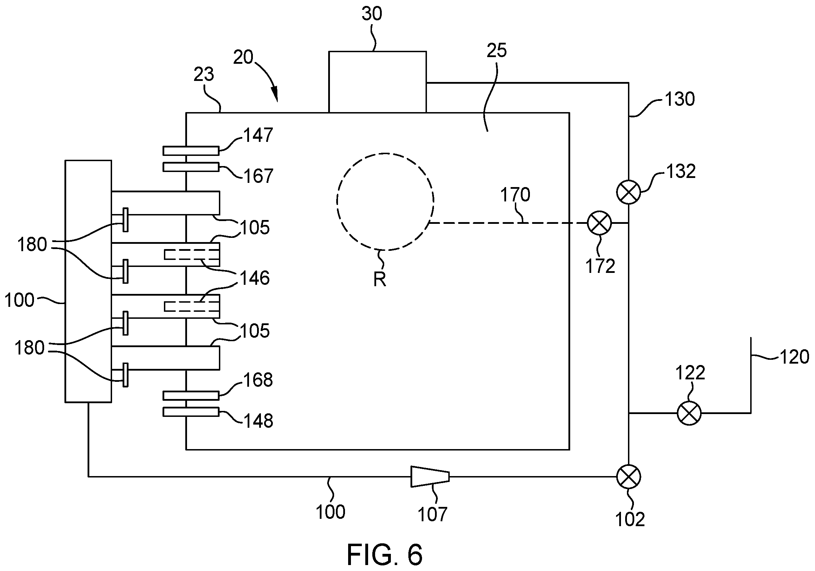

In one embodiment, a first gas line 100 is used to supply oxidants into the chamber 25. Exemplary oxidants include air, flue gas, oxygen, or a combination of these gases. As seen in Figures 3, 4, and 6, the first gas line 100 includes a set of four inlets 105 for injecting gas into the chamber 25. Figure 4 is a partial view of the first gas line 100 having four auxiliary lines connected to the four inlets 105. Figure 5 is an enlarged view of one of the inlets 105 connected to one of the auxiliary lines of the first gas line 100. Figure 6 is a schematic view of the chamber 25 and the gas lines of the combustion system 10 of Figure 1. The inlets 105 of the first gas line 100 are arranged vertically along the sidewall 23 of the chamber 25. In one example, the inlets 105 are aligned with the midpoint of the height of the chamber 25. It is contemplated the inlets 105 can be positioned at any suitable height in the chamber 25, for example, between 25% to 75% of the height of the chamber 25. In one embodiment, these inlets 105 are configured to direct the flow of the oxidants along a sidewall 23 of the chamber 25. Flow of at least a portion of the oxidants along the surface of the sidewall 23 is desirable. It is known that adherence of the gas flow to the surface of the sidewall promotes an efficient and repeatable circulation pattern within the chamber 25. Although four inlets 105 are shown, it is contemplated that each set of inlets may include any suitable number of inlets 105, such as one, two, three, five or more inlets 105. In Figure 2, only one inlet 105 is seen due to the vertical alignment of the inlets 105. Suitable inlets 105 include nozzles, lances, tubes, or other suitable fluid supplying devices.

In one embodiment, the system 10 may include one or more inlets 105 located on a first sidewall 23 of the chamber 25 and another one or more inlets 105 located on a second sidewall 23 of the chamber 25, as shown in Figure 2. In another embodiment, two more sets of inlets 105 may be positioned on one or more sidewalls 23 of the chamber 25. For example, each of the two opposing longer sidewalls 23 may include three sets of four inlets 105. In yet another embodiment, a plurality of chambers 25 may be stacked on top of one another, with the intermediate floors and ceilings removed. In other words, the adjacent chambers 25 are open to each other, such that the stack chambers form a larger chamber. For example, a combustion system 10 may include a chamber having a multiple sets (*e.g.,* 2-6 sets) of inlets 105 spaced vertically and multiple sets (*e.g.,* 2-6 sets) of inlets 105 spaced horizontally along one or more sidewalls 23 of the chamber 25.

Referring to Figure 6, the first gas line 100 is in selective fluid communication with an air supply line 120. A damper 122 may be used to control the flow of air into the first gas line 100. The first gas line 100 is also in selective fluid communication with a first flue gas recycle line 130 from the stack 30. The first flue gas recycle line 130 may recycle some or all of the flue gas exiting the stack 30. A damper 132 may be used to control the flow of flue gas from the first flue gas recycle line 130 into the first gas line 100. In some embodiments, the first gas line 100 is also in selective fluid communication with a second flue gas recycle line 170 from the radiant section R of the chamber 25. A damper 172 may be used to control the flow of flue gas from the second flue gas recycle line 170 to the first gas line 100. It is contemplated the combustion system 10 may include the first recycle line 130, the second recycle line 170, or both. The first gas line 100 may include an optional blower 107, an optional damper 102, or both to control the flow of gas in the first gas line 100 toward the chamber 25.

Referring back to Figure 3, a second gas line 140 is used to supply a first fuel into the chamber 25. Exemplary fuels include a carbon containing fuel, for example, hydrocarbons such as natural gas. In one example, the second gas line 140 includes a three-way valve 145 for distributing the carbon containing fuel to a central area and to a periphery along a sidewall 23 of the chamber 25. The three-way valve 125 may be configured to distribute the carbon containing fuel to the central area, to the periphery, or to both. As shown in Figure 3 and 6, the second gas line 140 includes two central inlets 146 for supplying gas into the central area along the sidewall 23 of the chamber 25. The central inlets 146 introduce the carbon containing fuel at a location downstream from the inlets 105 of the first gas line 100. In one example, the central inlets 146 are located from 0.1 inches to 10 inches, from 0.1 to 5 inches, or from 0.1 to 3 inches downstream from the nozzles 105. In this embodiment, the central inlets 146 are horizontally aligned with the two middle inlets 105 of the first gas line 100. It is contemplated that the central inlets 146 may be located between any of the four inlets 105 of the first gas line 100. For example, the two central inlets 146 may be horizontally aligned with the uppermost and lowermost inlets 105 of the first gas line 100. It is contemplated the second gas line 140 may include any suitable number of central inlets 146 for supplying natural gas into the central area, such as one, three, four or more central inlets 146.

The second gas line 140 also includes one or more inlets 147, 148 for supplying natural gas to the periphery along a sidewall 23 of the chamber 25. As shown in Figures 3 and 6, the second gas line 140 includes an upper inlet 147 and a lower inlet 148 for suppling natural gas to the upper periphery and the lower periphery, respectively, of the chamber 25. As shown, the upper inlet 147 is located in the upper periphery of the chamber 25 above the upper inlet 105 of first gas line 100, and the lower inlet 148 is located in the lower periphery of the chamber 25 below the lower inlet 105 of the first gas line 100. In one embodiment, the upper inlet 147 is located at a distance from 1% to 30% of the height of the chamber 25 below the ceiling 22. The lower inlet 148 is located at a distance from 1% to 30% of the height of the chamber 25 above the floor 21. In one example, the upper inlet 147 is located at about 6, 9, or 12 inches below the ceiling 22, and the lower inlet 148 is located at about 6, 9, or 12 inches above the floor 21 in a chamber 25 having a height of 10 feet.

In the example shown in Figure 3, the upper inlet 147, the lower inlet 148, and the central inlets 146 may be substantially, vertically aligned and located downstream from the inlets 105 of the first gas line 100. In another embodiment, the upper and lower inlets 147, 148 are not vertically aligned with the central inlets 146. For example, the upper and lower inlets 147, 148 may be located within 3 feet upstream or downstream *(e.g.,* to the right or left) of the central inlets 146, while maintaining the vertical separation. Although a single upper inlet 147 and a single lower inlet 148 are shown, any suitable number of upper and lower inlets 147, 148 may be provided in the upper and lower peripheries of the chambers 25, such as two, three or more inlets 147, 148. In some embodiments, either one or more upper inlets 147 or one or more lower inlets 148 are provided. Suitable inlets 146, 147, 148 include nozzles, lances, tubes, or other suitable fluid supplying device.

A third gas line 160 is used to supply a second fuel into the chamber 25. An exemplary second fuel is hydrogen. In one embodiment, the second fuel may contain at least 90% hydrogen by mole fraction or at least 95% hydrogen, such as pure hydrogen. The second fuel from the third gas line 160 is different than the fuel from the second gas line 140. In one example, the third gas line 160 includes one or more inlets 167, 168 for supplying hydrogen gas to the periphery of the chamber 25. As shown in Figures 3 and 6, the third gas line 160 includes an upper inlet 167 and a lower inlet 168 for suppling hydrogen gas into, respectively, the upper periphery and the lower periphery of the chamber 25. As shown, the upper inlet 167 is located in the upper periphery of the chamber 25 above the uppermost inlet 105 of first gas line 100, and the lower inlet 168 is located in the lower periphery of the chamber 25 below the lowermost inlet 105 of the first gas line 100. In one embodiment, the upper inlet 167 is located at a distance from 1% to 30% of the height of the chamber 25 below the ceiling 22. The lower inlet 168 is located at a distance from 1% to 30% of the height of the chamber 25 above the floor 21. In one example, the upper inlet 167 is located at about 9, 12, or 15 inches below the ceiling 22, and the lower inlet 168 is located at about 9, 12, or 15 inches above the floor 21 in a chamber 25 having a height of 10 feet.

In the example shown in Figure 3, the upper inlet 167 and the lower inlet 168 of the third gas line 160 are substantially, vertically aligned with the upper and lower inlets 147, 148 of the second gas line 140 and located downstream from the inlets 105 of the first gas line 100. In another embodiment, the upper and lower inlets 167, 168 are not aligned with the upper and lower inlets 147, 148 of the second gas line 140, while remaining downstream from the inlets 105 of the first gas line 100. For example, the upper and lower inlets 167, 168 may be located within 3 feet upstream or downstream *(e.g.,* to the right or left) of the upper and lower inlets 147, 148, respectively, while maintaining the vertical separation. In this example, the upper hydrogen inlet 167 is located between the upper inlet 147 and the uppermost inlet 105 of the first gas line 100, and the lower hydrogen inlet 168 is located between the lower inlet 148 and the lowermost inlet 105 of the first gas line 100. In some embodiments, the upper hydrogen inlet 167 may be located above the upper natural gas inlet 147, and the lower hydrogen inlet 168 may be located below the lower natural gas inlet 148. Suitable inlets 167, 168 include nozzles, lances, tubes, or other suitable fluid supplying device.

A fourth gas line 182 having one or more inlets 180 is provided to supply an oxidant into the chamber 25 via the inlets 105 of the first gas line 100. An exemplary oxidant is oxygen. One embodiment, the oxidant may contain at least 90% oxygen by mole fraction or at least 95% oxygen, such as pure oxygen. In one embodiment, the one or more inlets 180 is fluidly coupled to the inlets 105 of the first gas line 100, as shown in Figures 4-6. In one example, the inlet 180 is coupled to a portion of the first gas line 100 located upstream from the outlet of the inlet 105. Figure 5 shows the inlet 180 is coupled to the auxiliary line of the first gas line 100. Although four inlets 180 are shown, it is contemplated any suitable number of inlets 180 may be used, such as one, two, three, five or more inlets 180. Suitable inlets 180 include nozzles, lances, tubes, or other suitable fluid supplying device.

Embodiments of the present disclosure provide a combustion system 10 configured to combust oxygen and hydrogen to generate energy. In this respect, the combustion system 10 advantageously generate energy without producing carbon containing or nitrogen containing pollutants. In addition, flue gas is provided to dilute the amount of oxygen and hydrogen in the chamber 25 such that the combustion temperature is in a range from 1,200°F to 1,800°F.

Operation of the combustion system 10 to produce energy by combusting oxygen and hydrogen will now be described.

Initially, the temperature of the chamber 25 is increased by combusting a carbon based fuel with an oxidant. In this example, natural gas is reacted with air to raise the temperature in the combustion system 10. This operation may be optional if the temperature in the combustion system 10 is sufficient to conduct flameless combustion of oxygen with hydrogen. Air is supplied into the first gas line 100 by opening the damper 122 between the air supply line 120 and the first gas line 100. The optional blower 107 is turned on to force air toward the chamber 25. The damper 132 between the first flue gas recycle line 130 and the first gas line 100 is closed. If used, the damper 172 between the second flue gas recycle line 170 and the first gas line 100 is also closed. Air enters the chamber 25 via the inlets 105 of the first gas line 100. Natural gas is supplied into the chamber 25 via the central inlets 146 of the second gas line 140. The amount of the air and natural gas supplied to the chamber 25 depends on the amount of desired heat generation. In this example, the combustion of natural gas with air may occur using flame combustion. However, it is contemplated the combustion may also occur using flameless combustion. The combustion of natural gas with air continues until the oxygen content in the top radiant section R of the chamber 25 is in a range from 1% to 10% or from 2% to 5%, such as about 3% of oxygen by mole fraction.

When the oxygen content reaches from 1% to 10%, such as about 3%, by mole fraction, oxygen is injected to react with natural gas to generate energy while stopping the supply of air. The air damper 122 is closed to stop the supply of air to the first gas line 100. The air is replaced by supplying flue gas to the first gas line 100. In one example, the flue gas damper 132 is opened to supply flue gas from the first flue gas recycle line 130 to the first gas line 100. Alternatively, or in addition to, the flue gas damper 172 is opened to supply flue gas from the second flue gas recycle line 170 to the first gas line 100. The amount of flue gas supplied should be sufficient to replenish the amount of air that was previously flowing through the first gas line 100. Optionally, the damper 102 in the first gas line 100 is opened further to provide more flow to the blower 107 to make up for the supply of air. The flue gas enters the chamber 25 via the inlets 105 of the first gas line 100.

In this example, oxygen is added to the flue gas in the first gas line 100 to make up for the oxygen loss from the stoppage of the air supply. It must be noted that oxygen may be added simultaneously with or before supplying the flue gas to the chamber. The oxygen supplied by the oxygen inlets 180 mixes with the flue gas in the first gas line 100 before exiting the inlets 105. In one example, pure oxygen is injected by the oxygen inlets 180. The amount of oxygen supplied is sufficient to provide the flue gas/oxygen mixture entering the chamber 25 to contain from 15% to 25% oxygen, such as from 20% to from 22% oxygen, such as about 21% oxygen by mole fraction. The transition from air to oxygen is controlled so that the amount of oxygen at the top radiant section R of the chamber 25 is maintained from 1% to 10%, such as about 3%, by mole fraction.

After the flue gas is in circulation, the combustion process continues until a negative pressure of from 0.05 inches to 0.3 inches of water column, such as 0.1 inches of water column, is reached at the top radiant section R of the chamber 25. In one example, the amount of flue gas/oxygen mixture and the amount of natural gas supplied from the central inlets 146 are controlled so that the top radiant section R can obtain a negative pressure of 0.1 inches of water column.

Thereafter, the supply of natural gas is transitioned from the central inlets 146 to the upper and lower inlets 147, 148. The central inlets 146 are closed, and the upper and lower inlets 147, 148 are opened to supply natural gas for the combustion. In one example, the transition occurs while maintaining oxygen at about 3% by mole fraction and a negative pressure of 0.1 inches of water column at the top radiant section R of the chamber 25. The temperature in the chamber 25 is at or above the auto-ignition temperature of oxygen and hydrogen mixture and the flue gas. In this respect, combustion in the chamber 25 will take place via flameless combustion. In one example, the temperature in the chamber 25 is in a range from 1,000°F to 2,500°F or from 1,200°F to 1,800°F.

After switching to the upper and lower inlets 147, 148, the fuel for the combustion is transitioned from natural gas to hydrogen. The upper and lower inlets 147, 148 of the second gas line 140 are closed, and the upper and lower inlets 167, 168 of the third gas line 160 are opened. In this respect, the combustion gases supplied to the chamber 25 include the hydrogen (*e.g.,* pure hydrogen) from the third gas line 160, oxygen (*e.g.,* pure oxygen) from the oxygen inlets 180, and the flue gas in circulation. The blower 107 and the damper 102 may be operated to control the mass flow rate in circulation. In one example, the mass flow rate is substantially equal to the mass flow rate during air combustion discussed above. The oxygen supplied is controlled to maintain oxygen at about 3% in the radiant section R. The pressure at the top radiant section R of the chamber 25 may be controlled by operating the stack dampers 35. The oxygen and hydrogen combustion generates heat and beneficially produces water steam as the flue gas and does not produce pollutants such as nitrous oxide and carbon monoxide. Using only oxygen and hydrogen as the reactants, the combustion advantageously does not require the recovery of nitrous oxide and carbon monoxide. The addition of the flue gas allows the flameless of combustion of oxygen and hydrogen to proceed at a lower temperature, such as from 1,200°F to 1,800°F.

In one embodiment, a combustion system includes a combustion chamber for generating energy. The system includes a first inlet for supplying an oxidant into the chamber and a second inlet for supplying a fuel into the chamber. The system also includes a third inlet in fluid communication with the first inlet for supplying oxygen into the chamber. The system further includes a fourth inlet for supplying hydrogen into the chamber. A circulation line is used to deliver a flue gas from the chamber to the first inlet.

In some embodiments, the system includes an upper fifth inlet and a lower fifth inlet for supplying the fuel into the chamber, wherein the upper fifth inlet is positioned above the first inlet and downstream from the first inlet and the lower fifth inlet is positioned below the first inlet and downstream from the first inlet.

In some embodiments, the second inlet is positioned between the upper fifth inlet and the lower fifth inlet.

In some embodiments, the second inlet is positioned in substantially vertically alignment with the upper and lower fifth inlets.

In some embodiments, the fuel comprises natural gas.

In some embodiments, the oxidant comprises air.

In some embodiments, the fourth inlet comprises an upper fourth inlet positioned above the first inlet and downstream from the first inlet and the lower fourth inlet is positioned below the first inlet and downstream from the first inlet.

In some embodiments, the oxygen from the third inlet enters the chamber via the first inlet.

In some embodiments, the second inlet and the fourth inlet are positioned downstream from the first inlet.

In some embodiments, the system includes a stack having a stack damper.

In some embodiments, the first inlet comprises a plurality of first inlets, and wherein one of the first inlet of the plurality of first inlets is located on a first wall of the chamber and another one of the first inlet of the plurality of first inlets is located on a second wall of the chamber.

In one embodiment, a method of operating a combustion system having a chamber is provided. The method includes supplying a flue gas via a first gas line into the chamber. Oxygen is supplied into the first gas line at a location upstream from the chamber and enters the chamber along with the flue gas. Hydrogen is supplied into the chamber via a plurality of second inlets. The temperature of the chamber at the point of mixing is above the auto-ignition temperature of oxygen and hydrogen.

In one embodiment, a method of operating a combustion system having a chamber is provided. The method includes supplying air via a first inlet into the chamber and supplying a carbon containing fuel via a second inlet for combustion with the air. Oxygen is supplied via a third inlet while reducing the supply of air. Also, a flue gas is circulated into the chamber while reducing the supply of air. The method also includes transitioning supplying the carbon containing fuel from the second inlet to a plurality of fourth inlets. Then, hydrogen is supplied via a plurality of fifth inlets while reducing flow of the carbon containing fuel from the plurality of fourth inlets.

In one embodiment, a method of operating a combustion system having a chamber is provided. The method includes supplying air via a first inlet into the chamber and supplying a carbon containing fuel via a second inlet for combustion with the air. Oxygen is supplied via a third inlet while reducing the supply of air. Also, a flue gas is circulated into the chamber while reducing the supply of air. The method also includes supplying the carbon containing fuel via a plurality of fourth inlets and stopping flow of the carbon containing fuel from the second inlet. Then, hydrogen is supplied via a plurality of fifth inlets while reducing flow of the carbon containing fuel from the plurality of fourth inlets.

In some embodiments, the third inlet supplies oxygen into a location upstream from the first inlet.

In some embodiments, a mixture of the oxygen from the third inlet and the flue gas exiting the first inlet has an oxygen content from 20% to 22% of oxygen by mole fraction.

In some embodiments, the method includes maintaining from 1% to 10% oxygen content by mole fraction at a top radiant section of the chamber while supplying hydrogen via the plurality of fifth inlets.

In some embodiments, the method includes maintaining a negative pressure from 0.05 inches to 0.3 inches of water column in a top radiant section of the chamber while supplying the carbon containing fuel via a plurality of fourth inlets.

In some embodiments, a temperature in the chamber is above an auto-ignition temperature of hydrogen and oxygen while supplying hydrogen.

In some embodiments, the plurality of fourth inlets include an upper fourth inlet positioned above the first inlet and a lower fourth inlet positioned above the first inlet, and wherein the second inlet is positioned between the upper fourth inlet and the lower fourth inlet.

In another embodiment, a method of operating a combustion system having a chamber is provided. The method includes supplying a flue gas via a first gas line into the chamber and supplying oxygen into the first gas line at a location upstream from the chamber. A carbon containing fuel is supplied via a first inlet of a second gas line for combustion with the oxygen. The method also includes supplying the carbon containing fuel via a plurality of second inlets of the second gas line and stopping flow through the first inlet. Hydrogen is supplied via a plurality of third inlets while reducing flow of the carbon containing fuel from the plurality of second inlets.

In another embodiment, a method operating a combustion system having a chamber is provided. The method includes supplying a flue gas via a first gas line into the chamber and supplying oxygen into the first gas line at a location upstream from the chamber. The oxygen enters the chamber along with the flue gas. The method also includes supplying hydrogen via a plurality of second inlets into the chamber, wherein a location in the chamber where the oxygen and the hydrogen mix has a temperature above the auto-ignition temperature of oxygen and hydrogen.

In some embodiments, the first gas line includes a plurality of inlets for supplying the flue gas into the chamber.

In some embodiments, the plurality of second inlets include an upper second inlet and a lower second inlet positioned above and below, respectively, the plurality of inlets of the first gas line, and wherein the first inlet of the second gas line is positioned between the upper second inlet and the lower second inlet.

In some embodiments, the carbon containing fuel comprises natural gas.

While the foregoing is directed to embodiments of the present disclosure, other and further embodiments of the disclosure may be devised without departing from the basic scope thereof, and the scope thereof is determined by the claims that follow.

## Claims

**1.** A combustion system, comprising:
a combustion chamber;
a first inlet for supplying an oxidant into the chamber;
a second inlet for supplying a fuel into the chamber;
a third inlet in fluid communication with the first inlet for supplying oxygen into the chamber;
a fourth inlet for supplying hydrogen into the chamber; and
a circulation line for delivering a flue gas from the chamber to the first inlet.

**2.** The system of claim 1, further comprising an upper fifth inlet and a lower fifth inlet for supplying the fuel into the chamber, wherein the upper fifth inlet is positioned above the first inlet and downstream from the first inlet and the lower fifth inlet is positioned below the first inlet and downstream from the first inlet.

**3.** The system of claims 1 or 2, wherein the second inlet is positioned between the upper fifth inlet and the lower fifth inlet; optionally,
wherein the second inlet is positioned in substantially vertically alignment with the upper and lower fifth inlets.

**3.** The system of claims 1 or 2, wherein the fuel comprises natural gas.

**4.** The system of claims 1 to 3, wherein the fourth inlet comprises an upper fourth inlet positioned above the first inlet and downstream from the first inlet and the lower fourth inlet is positioned below the first inlet and downstream from the first inlet; optionally,
wherein oxygen from the third inlet enters the chamber via the first inlet; and optionally,
wherein the second inlet and the fourth inlet are positioned downstream from the first inlet.

**5.** The system of any of claims 1-4, further comprising a stack having a stack damper.

**6.** The system of any of claims 1-5, wherein the first inlet comprises a plurality of first inlets, and wherein,
one of the first inlet of the plurality of first inlets is located on a first wall of the chamber; and
another one of the first inlet of the plurality of first inlets is located on a second wall of the chamber.

**7.** The system of any of claims 1-6, wherein the oxidant comprises air.

**8.** A method operating a combustion system having a chamber, comprising:
supplying air via a first inlet into the chamber;
supplying a carbon containing fuel via a second inlet for combustion with the air;
supplying oxygen via a third inlet while reducing the air being supplied;
circulating a flue gas into the chamber while reducing the supply of air; and
supplying the carbon containing fuel via a plurality of fourth inlets and stopping flow of the carbon containing fuel from the second inlet; and
supplying hydrogen via a plurality of fifth inlets while reducing flow of the carbon containing fuel from the plurality of fourth inlets.

**9.** The method of claim 8, wherein the third inlet supplies oxygen into a location upstream from the first inlet.

**10.** The method of claims 8 or 9, wherein a mixture of the oxygen from the third inlet and the flue gas exiting the first inlet has an oxygen content from 20% to 22% of oxygen by mole fraction.

**11.** The method of any of claims 8 to 10, further comprising maintaining from 1% to 10% oxygen content by mole fraction at a top radiant section of the chamber while supplying hydrogen via the plurality of fifth inlets.

**12.** The method of any of claims 8-11, further comprising maintaining a negative pressure from 0.05 inches to 0.3 inches of water column in a top radiant section of the chamber while supplying the carbon containing fuel via a plurality of fourth inlets.

**13.** The method of any of claims 8-12, wherein a temperature in the chamber is above an auto-ignition temperature of hydrogen and oxygen while supplying hydrogen.

**14.** The method of any of claims 8-13, wherein the plurality of fourth inlets include an upper fourth inlet positioned above the first inlet and a lower fourth inlet positioned above the first inlet, and
wherein the second inlet is positioned between the upper fourth inlet and the lower fourth inlet.

**15.** A method operating a combustion system having a chamber, comprising:
supplying a flue gas via a first gas line into the chamber;
supplying oxygen into the first gas line at a location upstream from the chamber;
supplying a carbon containing fuel via a first inlet of a second gas line for combustion with the oxygen;
supplying the carbon containing fuel via a plurality of second inlets of the second gas line and stopping flow through the first inlet; and
supplying hydrogen via a plurality of third inlets while reducing flow of the carbon containing fuel from the plurality of second inlets.
